# EUROPEAN PATENT APPLICATION

(11) **EP 4 600 817 A1**
(43) Date of publication of application: **13.08.2025**
(21) Application number: 24156943.3
(22) Date of filing: 09.02.2024
(51) Int. Cl.: G06F 9/48

(54) **MULTIPLE OBJECT DETECTION AND TRACKING**

(71) Applicant: Helsing GmbH, 81671 Munich (DE)
(72) Inventor: WANKA, Jean-Marc, 81671 Munich (DE); HENDRICH, Florian, 81671 Munich (DE)
(74) Representative: Rummler, Felix

(57) **Abstract**

According to an aspect of the present disclosure, there is provided a computer-implemented method comprising: receiving a stream of data containing a plurality of data elements, wherein each of the data elements is associated with a unique identifier; selecting a subset of said data elements using said identifiers; and processing the data elements of the selected subset to detect one or more features of the data elements of the selected subset.

## Description

The present invention relates to a method that may be employed for multiple object detection and tracking.

### Background

Neural network-based object detection allows to automatically detect objects in video streams. Video streams typically consist of video frames which are received one frame at a time. Typically, neural networks are applied to each frame individually and return detected features such as bounding boxes around observed objects or a classification into one of a plurality of predefined categories. Multi-object tracking is used to combine detections over multiple frames into so called tracks. Each track has a uniquely assigned identifier.

Neural networks can also be used to extract visual features of objects that allow to determine similarities between objects. One option is to use the output of an object detection network, e.g., a bounding box, to extract visual features that can be used to associate objects from different perspectives or over longer periods of time.

Edge compute devices, i.e., compute devices deployed in vehicles, drones, etc. are typically constrained in their computing power and power consumption. Such devices thus have a limited or fixed compute budget, i.e., they can only perform a certain amount of computation over a given period of time. However, a workflow including new object detection and multi-object tracking in conjunction with visual feature calculation would require a continuous processing of all the features for every object. This would result in high latencies and power consumption.

The present disclosure aims to address this problem.

### Summary of the Invention

The present invention is defined in the independent claims. The dependent claims recite selected optional features.

In the following, each of the described methods, apparatuses, examples, and aspects, which do not fully correspond to the invention as defined in the claims is thus not according to the invention and is, as well as the whole following description, present for illustration purposes only or to highlight specific aspects or features of the claims.

According to an aspect of the present disclosure, there is provided a computer-implemented method comprising: receiving a stream of data containing a plurality of data elements, wherein each of the data elements is associated with a unique identifier; selecting a subset of said data elements using said identifiers; and processing the data elements of the selected subset to detect one or more features of the data elements of the selected subset.

The method may be used to improve the tracking of multiple objects in an environment. The objects may be represented by the data elements. The objects may be characterized and identifiable by certain features, for example visual features. The object features are reflected by corresponding features of the data elements. Such features enable assigning unique identifiers to each of the data elements and associated objects. The identifiers may be used to keep track of the objects represented thereby. The identifiers may also be used to select data elements for processing. In particular, the identifiers may be used to determine an order or sequence in which multiple objects are scheduled for processing, for the purposes of feature detection and object tracking. This is particularly useful in the context of limited processing resources where it may not be possible to monitor all objects at the same time.

In an exemplary implementation, the stream of data corresponds to a stream of video frames. The data elements represent real-world objects, e.g., vehicles recorded by a video camera. Each vehicle has a unique identifier. The method selects one or more of the vehicles, using the identifiers, and proceeds by processing only the data elements associated with the selected vehicles, to detect features of the selected vehicles. The detected features may be used to track the vehicles.

In an embodiment, the method comprises: assigning priorities to at least some of the data elements; and processing the data elements in an order or sequence corresponding to the assigned priorities. The priorities may be assigned based on a predetermined set of rules.

The assignment of priorities enables determining a sequence of processing of the data elements. In particular, the data element having the highest priority is processed first, followed by the processing of the data element having the second highest priority, and so on.

When the processing of a given data element is complete, the data element may be assigned a new (lower) priority. Accordingly, in this embodiment, the selection of said subset of the data elements is done based on the assigned priorities. In particular, the selected subset corresponds to the data elements having the highest priority at the time of making the selection.

This embodiment enables the implementation of a round robin algorithm to schedule the order of processing of the data elements contained in the data stream. A round robin algorithm can be used to schedule the processing of an iterative sequence of selected subsets of data elements. In each iteration, the selected subset may be allocated a predetermined compute budget. If the processing of a given selected subset is not completed when the compute budget is spent, it may be re-selected in the next or a subsequent iteration.

In an embodiment, the method further comprises: allocating each of the data elements to one of a plurality of classes, and assigning said priorities based on the classes.

The data elements may represent objects in an environment. In this example, the classes may be object classes. An object class may be associated with various properties or parameters of an object. For example, there may be object classes for different types of objects such as vehicles, stationary objects (buildings), humans, different types of vehicles (passenger cars, trucks, tanks, boats, ships, drones, etc.), etc. Such object classes may be defined based on physical attributes of the objects, for example size, colour, speed, location, distance etc. In the present embodiment, the classes may be associated with different priorities, which in turn may determine the order in which the corresponding data elements are processed. For example, a moving object may require attention more urgently than a stationary object and thus have a higher priority. Similarly, a closer object may be given a higher priority than a distant object.

In an embodiment, the method comprises: selecting said subset of said data elements data based on a predetermined set of rules, wherein the predetermined set of rules are based on the availability of processing resources, and in particular comprising: setting a period of time and processing the selected subset of said data elements for that period of time; and/or allocating a portion of an available computing power for processing the selected subset of said data elements.

Using a set of predetermined rules enables better managing the available processing resources. For example, the method may be implemented in a device with limited processing resources, e.g., a drone. Processing all data elements of the data stream at the same time could exceed the available resources. Applying a set of predetermined rules facilitates the selection of subsets of the data elements for the purpose of scheduling the processing.

In particular, each of the selected data elements may be processed only for a specified period of time and/or using a selected portion of an available computing power, e.g., a portion of available processors and/or memory. Accordingly, in this embodiment, a compute "budget" may be set for processing the selected subset of the data elements.

In an embodiment, the method further comprises: iteratively repeating the steps of selecting a subset of said data elements and processing the data elements of the selected subset; and in particular iteratively repeating the steps of selecting a subset of said data elements and processing the data elements of the selected subset until all data elements of the plurality of data elements have been processed.

In this embodiment, the processing of the data elements is performed sequentially by iteratively selecting the subset of the data elements which is to be processed next. Each selected subset may include more one than one data element. However, the processing of all data elements at the same time is avoided. That is, at a given point in time, only data elements of the selected subset are processed.

In an embodiment, the method comprises: managing a data stack or queue containing said identifiers, wherein the selection of said subset of said data elements comprises selecting a corresponding subset of said identifiers from said stack or queue.

Managing a data stack or queue for the identifiers facilitates the scheduling of data elements for processing. For example, the stack or queue may be used to implement first-in-first-out (FIFO) and last-in-last-out (LIFO) and similar algorithms for iteratively selecting and processing the data elements.

In an embodiment, the method further comprises: detecting one or more new data elements in said stream of data; assigning a new unique identifier to said one or more new data elements; and adding the new unique identifier to said data stack or queue.

The data elements may represent detected objects in an environment of a device implementing the method. For example, the device may be a vehicle (car, drone) and the detected object may be another vehicle in the field of view of a sensor of the vehicle. The data element(s) corresponding to the newly detected object are added to the processing queue through their unique identifier.

In an embodiment, the method further comprises: determining that a data element corresponding to an identifier in the data stack or queue is no longer detected in the stream of data; and removing that identifier from the data stack or queue.

In this embodiment, if a detected object (e.g., vehicle) disappears from the field of view of the device implementing the method, the corresponding identifier is removed from the processing queue and thus removed from scheduling.

In an embodiment, the method comprises: detecting one or more new data elements in said stream of data; assigning a higher priority to said newly detected elements than to previously detected data elements; and selecting or re-selecting said newly detected elements as said subset of said data elements based on the assigned priority.

In this embodiment, newly detected data elements are prioritised. A newly detected data element may represent a newly detected object in the environment. Such newly detected object may initially be associated with fewer detected features, which may affect the tracking of such object. This may contrast with "old" data elements which may have undergone several rounds of processing and feature detection. To address this, the newly detected data elements are re-scheduled for processing and feature detection at a higher priority. In other words, newly detected data elements may be scheduled to "jump the queue" and come up for another round of processing sooner than "old" data elements. Once a sufficient number of features is identified for the newly detected data element, the higher priority assignment may be removed, and the data element may subsequently be selected and processed without preferential treatment.

Also, objects that repeatedly enter and leave a field of view of a device implementing the present method may be assigned a different priority than objects that remain within the field of view for a certain period of time.

In an embodiment, the method comprises: determining one or more properties associated with the data elements of the selected subset; and assigning a priority to the data elements of the selected subset based on the properties.

The properties indicate one or more of: whether said one or more features have previously been detected; a time when said one or more features were last detected; an estimated time, accuracy and/or complexity of detecting said one or more features; and the number of detected features.

The data elements may represent objects to be tracked in an environment. The accuracy and reliability of downstream algorithms such as sensor fusion (wherein detections and tracks from multiple sensors are fused) may depend on the quality and number of trackable features, e.g., visual features such as edges. By assigning priorities based on the number of features, the order of processing can be scheduled to take this into account. For example, if, for a given object, only a single visual feature has been identified, a higher priority may be assigned to that object, in order to identify additional visual features.

A data element may be associated with an object having some properties. The object may have one or more features that are also present in other objects. For example, the object may be a car represented in the image frames of a video stream and may be described by properties such as a bounding box (coordinates of the object in the image frames). The features to be extracted are visual features. A priority may be assigned based on when the features were last extracted for the object. For example, if the features have not yet been extracted, a high priority is assigned. If the features were recently extracted, e.g., in the last received frame, a low priority is assigned.

The properties may also indicate the complexity of feature extraction, e.g., how "easily" or quickly the features in question can be extracted. For example, if an object is in the middle of an image frame, features can be extracted more easily and/or quickly than for an object at the boundaries of the frame. The prioritisation may take this into account. Features that are more easily detected may be given preference (i.e., a relatively higher priority) because they are more likely to yield an accurate result.

In an embodiment, the method comprises: assigning a relatively higher priority or increasing a previously assigned priority if the number of features is below a threshold; and/or assigning a relatively lower priority or decreasing a previously assigned priority if the number of features is above a threshold.

In this embodiment, if the number of detected features is too low, a higher priority may be assigned, and additional processing resources may be made available to identify additional features. Conversely, if the number of detected features is sufficiently high, the priority level may be decreased, and fewer processing resources may be made available in the next round of scheduling.

In an embodiment the data elements represent objects in an environment, wherein said features correspond to features of said objects, wherein the features represent one or more of object classes, visual features, in particular bounding box parameters such as a bounding box size, and/or a status of a radar system used to detect and/or track the object.

In an embodiment, the data elements represent objects in an environment, wherein the identifiers are determined based on one or more parameters or properties associated with the corresponding object, in particular the object's position, movement, class, and/or visual appearance.

In an embodiment, the method is performed using an object tracking system, the object tracking system comprising: one or more sensors for generating sensor signals associated with one or more objects to be detected and tracked; one or more storage devices; and one or more processors configured to: process the sensor signals to generate a stream of data associated with the one or more objects; and perform a method including any of the steps described above

According to another aspect of the present disclosure, there is also provided a system, in particular an object tracking system, the system comprising: one or more sensors for generating sensor signals associated with one or more objects to be detected and tracked; one or more storage devices; and one or more processors configured to: process the sensor signals to generate a stream of data associated with the one or more objects; and perform a method including any of the steps described above.

According to another aspect of the present disclosure, there is further provided a computer program product for loading into a memory of a computer, comprising instructions, that, when executed by a processor of the computer, cause the computer to execute a computer-implemented method including any of the steps described above.

### Brief description of the drawings

The features, objects, and advantages of the present disclosure will become more apparent from the detailed description set forth below when taken in conjunction with the drawings in which:
Figure 1 schematically illustrates an environment in which a method according to an embodiment of the present disclosure can be implemented;
Figure 2 illustrates a flow chart of a method according to an embodiment of the present disclosure; and
Figure 3 illustrates a schematic block diagram of a device according to an embodiment of the present disclosure.

### Detailed description of exemplary embodiments

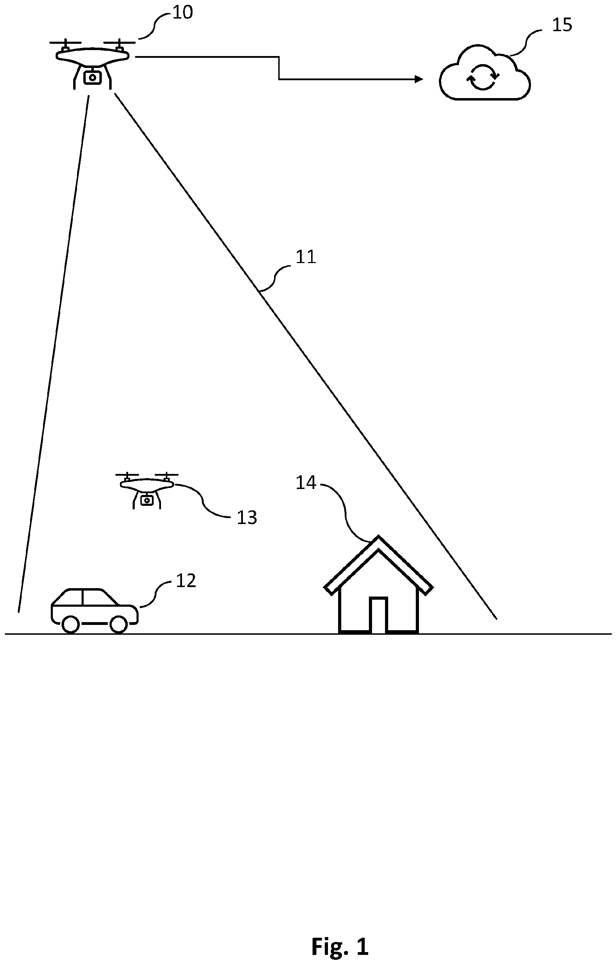

Figure 1 schematically illustrates an environment in which a method according to an embodiment of the present disclosure can be implemented. The method may be implemented in an unmanned aerial vehicle (UAV) 10 to detect and track objects. The UAV 10 may have one or more sensors, e.g., a video camera, to monitor an area corresponding to a field of view (FOV) 11 of the sensors. In the illustrated example, there are three objects within the FOV of the UAV 10, namely a car 12, a drone 13 and a house 14. Each of the objects 12, 13 and 14 belongs to one or more different object classes. The car 12 may belong to the object classes "moving object", "ground vehicle" and "passenger car". The drone 13 may belong to the object classes "moving object", "aerial vehicle" and "drone". The house 14 may belong to the object classes "stationary object", "building" and "house". These classes are illustrative only. Each object may belong to fewer or additional or different classes.

The drone 10 is configured to process the sensor signals from its video camera to detect and track the objects 12, 13 and 14. The sensor signals correspond to a stream of video frames. Each video frame contains a representation of the objects 12, 13 and 14 visible within the FOV 11. The objects 12, 13 and 14 may not be visible all the time. For example, the drone 13 may leave and re-enter the FOV 11. The car 12, when moving relative to the UAV 10, may be temporarily obscured by other objects, e.g., trees. Also, the objects 12, 13 and 14 may be visible from different perspectives and angles at different points in time and thus have different appearances.

The drone 10, implementing the method according to an embodiment of the present disclosure, is configured to select which of the objects 12, 13 and 14 is to be processed first in a given video frame. For example, the drone may process a first video frame to extract visual features of the drone 13 only. A subsequent frame may be processed to extract visual features of the car 12 only. The next frame may be processed to again extract visual features of the drone 13 only. The next frame may be processed to extract features of the house 14, only, and so on. This process is repeated iteratively. Accordingly, for any given frame, a subset of visible objects is selected and processed, thereby reducing processing overheads and power consumption.

In an embodiment, the drone 10 is configured to determine the sequence of processing based on priorities associated with object classes. For example, the object class "moving objects" may have a higher priority than the object class "stationary objects". Within the object class "moving objects", the object class "aerial vehicle" may have a higher priority than "ground vehicle", and the object class "drone" may have a higher priority than "passenger car". Thus, for example, video data relating to the drone 13 may be preferentially selected and processed.

It is to be understood that this is a simplified representation for illustration purposes. There may be many more objects within the FOV 11, and the drone 10 may have various different sensors. The determination of the processing order and the selection of corresponding subsets of the sensor data may take into account various other criteria, such as whether an object is newly detected, how close it is to the drone 10 or another object, the number of detected features associated with an object, etc.

The drone 10 may be communicatively coupled to a remote server 15. The drone 10 may be configured to transmit some or all the sensor signals from its sensors to the remote server 15. The method according to the present disclosure may be partially or wholly implemented on the remote server 15. In an embodiment, the selection of subsets of data for processing may be implemented by selecting which data is transmitted to the remote server 15.

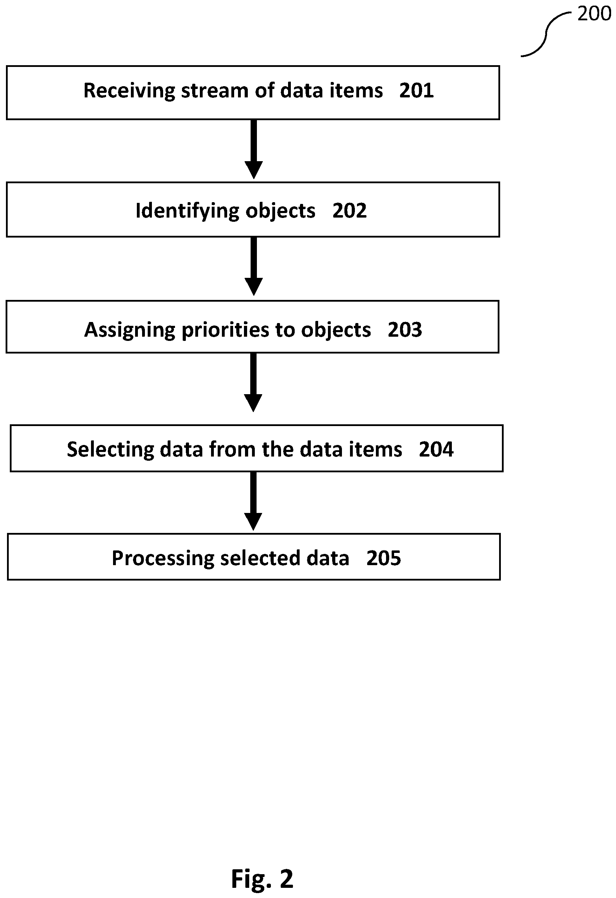

Figure 2 illustrates a flow chart of a method 200 according to an embodiment of the present disclosure. In step 201, the method receives a data stream comprising a plurality of data items. For example, the data items correspond to video frames in a stream of video data. Each data item may contain one or more data elements representing objects in an environment. For example, the data elements may correspond to images of the objects 12, 13 and 14 illustrated in Figure 1.

In step 202, the data items are processed to identify any objects represented by the data elements contained in the data items. The identification can be done using object identifiers which are assigned to objects when they are first detected. Each identifier represents a fingerprint that uniquely identifies the associated object. The identifiers may be based on or include positional information (e.g., information relating to the position, movement and pose of the object) and other information such as an object class or visual features.

In step 203, a priority is assigned to each identified object. The priority may be determined based on information contained in the object identifier. For example, the object identifier may identify an object class, as described in connection with Figure 1. The object identifier may also indicate additional information such as position or movement of an object. This information is processed to determine the priority based on a predetermined set of rules. For example, a moving object which is close and/or approaching is given a higher priority than a distant stationary object. Similarly, newly detected objects may be given a higher priority.

In step 204, data from the stream of data items is selected for processing. This includes selecting a subset of data elements contained in the data items that represent objects having the highest priority relative to the objects. The selected subset of data elements may correspond to bounding boxes associated with the objects of the highest priority.

In step 205, the selected data, i.e., the selected subset of data elements corresponding to the object(s) of the highest priority is processed. The processing includes detecting/verifying features of the objects. The processing may also include updating the object identifiers, for example to reflect a change of position or movement of an object. The processing output, in particular the updated identifiers, may then be used to track the object(s) corresponding to the selected subset of data elements. Once processing is complete, the priority assigned to the objects may be decreased, and the corresponding object identifier(s) are updated accordingly. The method may then return to step 204 to select another subset of data elements corresponding to an object or objects having the next highest priority. The processing step 205 is then repeated for those objects.

The method 200 represents a continuous, iterative process. There may be a continuous stream of incoming data which is processed as described above. In each iteration, another subset of data elements corresponding to objects in the environment is selected. The objects are processed sequentially, by making appropriate selections based on priorities. This enables a resource-efficient tracking of multiple objects represented by the received data stream.

The method according to embodiments of the present disclosure implements a round robin-type approach to only calculate visual features for objects when necessary. Typically, the visual features of an object do not change drastically from frame to frame. This realisation is used to only extract selected features, i.e., a limited amount of features of objects at each point in time. To this end, the object identifiers are used to decide, for each object, when to extract new features. The compute budget in this scenario is defined by the number of tracked objects for which visual features are extracted in each iteration.

In an embodiment, the method implements a queue of object identifiers identifying the objects for which features are to be extracted. For example, for every frame, the object detection and multi-object tracking provide tracks with assigned identifiers. The method may also include a budget for computing a number N of visual features per frame. To decide which visual features are to be selected, the method generates said queue of objects. The queue may be managed to define the order in which objects come up for processing. If a new object appears within the FOA 11 (Figure 1), it can be added to the front of the queue. Thereby, newly detected objects are processed with minimum delay and to generate a timely feature representation. Once the features of an object have been extracted, it enters the back of the queue in a round robin fashion. Tracked objects that are no longer present in the video stream are deleted from the queue.

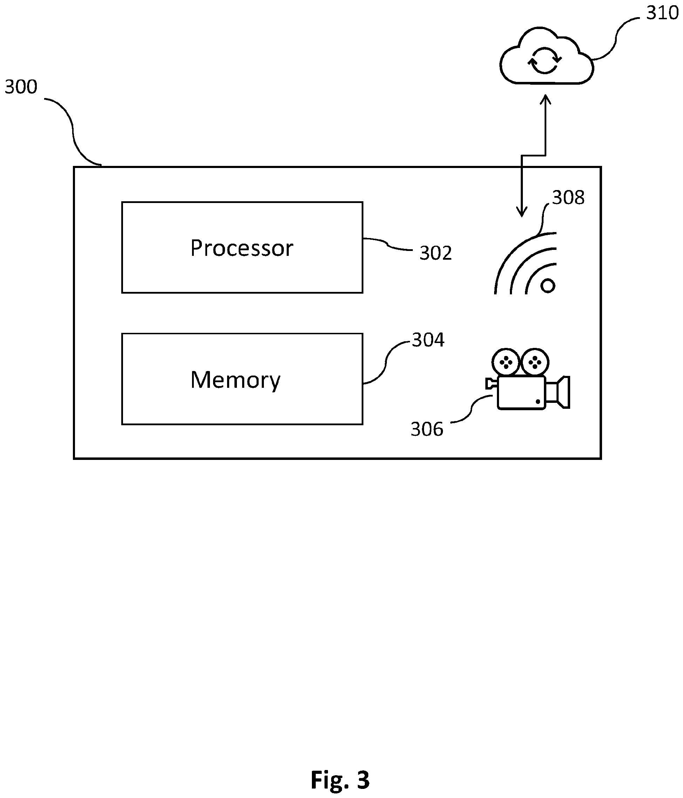

Figure 3 illustrates a schematic block diagram of a device 300 according to an embodiment of the present disclosure. The device 300 comprises at least one processor 302 and a memory 304. The memory 304 can be any type of memory. The device 300 optionally also comprises a sensor 306, for example a video camera, for generating a stream of sensor data, and a receiver/transmitter 308 for communicating with a remote server 310 or other devices. The processor 302, memory 304, sensor (e.g., camera) 306 and receiver/transmitter 308 are communicatively coupled with one another. The memory 304 stores instructions that, when executed by the processor 302, result in the execution, at least in part, of a method as described herein.

In an embodiment, the method includes consecutively receiving a plurality of data items (i.e., a stream of data items such as video frames), the data items representing a plurality of specific, different data contents of interest, herein also referred to as data elements. A data element may represent an object in image data, a sound in audio data, or a frequency pulse within a radar signal. The method may also include identifying the plurality of data elements of interest within the received data items by associating the data elements with respective, unambiguous identifiers. The method may further include consecutively processing the plurality of data items within a limited amount of time and/or using limited computing resources, wherein processing the data items includes processing a subset of the plurality of data elements, the subset representing data elements of interest per data item. This may include determining a feature of some of the data elements, such as bounding boxes, object classes, radar status indicating an "intent", etc. The determination of the subset of data elements to be processed is based on the identification of the plurality of data elements and a predetermined set of rules.

The method advantageously processes only a part of each data item, based on the identified content of interest. The identified content of interest is represented by the selected subset of data elements within each data item, wherein the selection is made based on a predetermined set of rules. The predetermined set of rules may for example determine that a newly identified content is processed first ("last in first out"), that an identified data element that has already been processed in a previous data item is not processed until all other identified data elements have been processed, and/or that the identified data element that has - among all identified data elements - been processed first is processed next.

The methods, devices and systems of the present disclosure address the problem of tracking multiple objects with a fixed compute budget which does not allow to calculate detailed visual features for every detected object. The present disclosure enables adhering to a predefined compute budget even in the presence of a varying amount of object detections per data item (e.g., video frame) of a continuous stream of sensor data.

## Claims

1. A computer-implemented method comprising:
receiving a stream of data containing a plurality of data elements, wherein each of the data elements is associated with a unique identifier;
selecting a subset of said data elements using said identifiers; and
processing the data elements of the selected subset to detect one or more features of the data elements of the selected subset.

2. The method of claim 1, comprising:
assigning priorities to at least some of the data elements, wherein, in particular, the priorities are determined based on a first set of predetermined rules; and
processing the data elements in an order or sequence corresponding to the assigned priorities.

3. The method of claim 2, further comprising:
allocating each of the data elements to one of a plurality of classes; and
assigning said priorities based on the classes.

4. The method of any preceding claim, comprising:
selecting said subset of said data elements data based on a second predetermined set of rules, wherein the second predetermined set of rules is based on the availability of processing resources, and in particular comprising:
setting a period of time and processing the selected subset of said data elements for that period of time; and/or
allocating a portion of an available computing power for processing the selected subset of said data elements.

5. The method of any preceding claim, further comprising:
iteratively repeating the steps of selecting a subset of said data elements and processing the data elements of the selected subset; and in particular iteratively repeating the steps of selecting a subset of said data elements and processing the data elements of the selected subset until all data elements of the plurality of data elements have been processed.

6. The method of any preceding claim, comprising:
managing a data stack or queue containing said identifiers, wherein the selection of said subset of said data elements comprises selecting a corresponding subset of said identifiers from said stack or queue.

7. The method of claim 6, comprising:
detecting one or more new data elements in said stream of data;
assigning a new unique identifier to said one or more new data elements; and
adding the new unique identifier to said data stack or queue.

8. The method of claim 6 or 7, comprising:
determining that a data element corresponding to an identifier in the data stack or queue is no longer detected in the stream of data; and
removing that identifier from the data stack or queue.

9. The method of any preceding claim, comprising:
detecting one or more new data elements in said stream of data;
assigning a higher priority to said newly detected elements than to previously detected data elements; and
selecting or re-selecting said newly detected elements as said subset of said data elements based on the assigned priority.

10. The method of any preceding claim, comprising:
determining one or more properties associated with the data elements of the selected subset; and
assigning a priority to the data elements of the selected subset based on the properties.

11. The method of claim 10, wherein the properties indicate one or more of:
whether said one or more features have previously been detected;
a time when said one or more features were last detected;
an estimated time, accuracy and/or complexity of detecting said one or more features; and
the number of detected features.

12. The method of any preceding claim, wherein the data elements represent objects in an environment, wherein said features correspond to features of said objects, wherein the features represent one or more of object classes, visual features, in particular bounding box parameters such as a bounding box size, and/or a status of a radar system used to detect and/or track the object.

13. The method of any preceding claim, wherein the data elements represent objects in an environment, wherein the identifiers are determined based on one or more parameters or properties associated with the corresponding object, in particular the object's position, movement, class, and/or visual appearance.

14. The method of any preceding claim, wherein the method is performed using an object tracking system, the object tracking system comprising:
one or more sensors for generating sensor signals associated with one or more objects to be detected and tracked;
one or more storage devices; and
one or more processors configured to:
process the sensor signals to generate a stream of data associated with the one or more objects; and
perform the method of any preceding claim.

15. A computer program product for loading into a memory of a computer, comprising instructions, that, when executed by a processor of the computer, cause the computer to execute the computer-implemented method of any of claims 1-13.
